Europäisches Patentamt

European Patent Office

Office européen des brevets

(19)

(11) Veröffentlichungsnummer: **0 274 048 B1**

# (12) EUROPÄISCHE PATENTSCHRIFT

(45) Veröffentlichungstag der Patentschrift: **24.03.93**

(21) Anmeldenummer: **87117533.7**

(22) Anmeldetag: **27.11.87**

(51) Int. Cl.⁵: **C08K 3/04**, C08K 3/22, C08L 81/04

(54) **Kunststoffbahn.**

(30) Priorität: **03.01.87 DE 3700134**

(43) Veröffentlichungstag der Anmeldung:
**13.07.88 Patentblatt 88/28**

(45) Bekanntmachung des Hinweises auf die
Patenterteilung:
**24.03.93 Patentblatt 93/12**

(84) Benannte Vertragsstaaten:
**BE CH DE ES FR GB IT LI NL SE**

(56) Entgegenhaltungen:
**EP-A- 0 153 442**
**EP-A- 0 194 361**

**JOURNAL OF APPLIED POLYMER SCIENCE,
Band 30, Nr. 9, September 1985, Seiten
3569-3578, John Wiley & Sons Inc., New York,
US; R. RAMASWAMY et al.: "Effect of Curing
Agents on Some Properties of a Polysulfide
sealant"**

(73) Patentinhaber: **RÜTGERSWERKE AKTIENGE-
SELLSCHAFT
Mainzer Landstrasse 217
W-6000 Frankfurt am Main 1(DE)**

(72) Erfinder: **Endruscheit, Peter
Rohlklinge 11
W-6940 Weinheim(DE)**
Erfinder: **Hockenberger, Lothar, Dr.
Brahmsstrasse 13
W-6700 Ludwigshafen/Rhein(DE)**
Erfinder: **Rühl, Karl, Dr.
Hochwaldstrasse 13
W-6350 Bad Nauheim(DE)**
Erfinder: **Scherp, Ernst
Erlenweg 5
W-6454 Bruchköbel(DE)**
Erfinder: **Bergmann, Franz-Josef, Dr.
Südring 63
W-6941 Laudenbach(DE)**
Erfinder: **Robinson, Raymond
15 Yule Road
Coventry CV4 7EZ(GB)**
Erfinder: **Lee, Timothy C. P., Dr.
18 Ferndale Drive
Kenilworth Warwickshire CV8 28F(GB)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine neue Kunststoffbahn, die als Abdichtungsbahn in Problembereichen eingesetzt werden kann und die eine zuverlässige, vollständige und langzeitig sichere Abdichtung gewährleistet.

Die Verwendung von Kunststoffbahnen, etwa PVC-, PE-, PP- oder EPDM-Bahnen, in Problembereichen wie Dach-, Deponie- oder Brückenabdichtungen ist bekannt. Jedoch hat jede dieser Kunststoffbahntypen gewisse Nachteile wie etwa mangelnde Witterungs- oder UV-Beständigkeit, nicht ausreichende Chemikalien-, Lösungsmittel- oder Temperaturbeständigkeit oder unzureichende Dauerelastizität oder Dauerdruckfestigkeit. Zudem bestehen Probleme bei der Verklebung einzelner Bahnen miteinander, sei es, daß als Kleber lösungsmittelhaltige Materialien oder andere Polymere eingesetzt werden oder daß die Verklebung in der Wärme erfolgen muß. In jedem Fall besteht die Gefahr, daß durch die Bildung von Störstellen der Verbund einzelner Bahnen miteinander nicht ausreichend gesichert ist.

Es ist daher die Aufgabe der vorliegenden Erfindung, eine Kunststoffbahn zu entwickeln, die die vorgenannten Nachteile nicht hat und die sich in den verschiedensten Anwendungsgebieten problemlos einsetzen läßt.

Die Lösung der Aufgabe erfolgt durch Kunststoffbahnen gemäß der Ansprüche 1 bis 6, ein Verfahren zu ihrer Verklebung gemäß Anspruch 7 sowie durch deren Verwendung gemäß der Ansprüche 8 bis 10.

Es ist aus DE-A 21 38 171 bekannt, daß aus Polysulfidmassen elastische Abdichtungsbänder hergestellt werden können, die mit chemisch vernetzenden Polysulfidmassen auf verschiedene Untergründe aufgeklebt werden können, wobei die Klebemassen und die Bänder zu einem chemisch einheitlichen Verbund vernetzen. Die entsprechenden Bänder, Massen und die aus ihnen hergestellten Fugenabdichtungen sind jedoch nicht ausreichend UV-, dauerdruck- und temperaturbeständig, um eventuell in anderer Form als Kunststoffbahnen eingesetzt werden zu können.

Es wurde nun gefunden, daß aus Massen aus Polysulfid-Oligomeren oder -Polymeren mit Ruß und einem Härter auf Basis Mangandioxid Bahnen hergestellt werden können, die das gesuchte Eigenschaftsprofil haben.

Diese Bahnen sind, wie von den Eigenschaften der eingesetzten Polysulfid-Oligomeren oder -Polymeren erwartet werden kann, dauerelastisch sogar bis zu einer Temperatur von -45 °C, witterungs- und chemikalienbeständig, reißfest mit hoher Weiterreißfestigkeit, und sie können mit entsprechenden Polysulfidmassen ohne Erwärmung so miteinander verklebt werden, daß ein chemisch einheitlicher Verbund entsteht.

Überraschenderweise haben diese Bahnen jedoch zusätzliche wertvolle Eigenschaften, die aus dem bisher bekannten Eigenschaftsprofil der Polysulfid-Oligomere und -Polymere nicht herleitbar waren. Es sind dies eine extrem gute UV-Beständigkeit, eine hervorragende Dauerdruckbeständigkeit und eine erhöhte Temperaturbeständigkeit.

So zeigen die erfindungsgemäßen Bahnen selbst nach einer mehr als 300tägigen intensiven UV-Bestrahlung lediglich einen leicht verminderten Oberflächenglanz. Die Dauerdruckbeständigkeit garantiert, daß auch beim langzeitigen Aufliegen schwerer Steine keine Beschädigung der Bahn erfolgt und daß nach Wegnahme dieser Belastung eine nahezu vollständige Rückstellung der ursprünglichen Oberfläche der Bahn erfolgt.

Die Temperaturbeständigkeit ist so erhöht, daß die Bahnen ohne Schädigung eine einstündige Erhitzung auf 180 °C überstehen und daß sie kurzzeitig mit bis zu 240 °C heißem Material in Kontakt gebracht werden können.

Aufgrund dieser Eigenschaften bieten sich die folgenden Verwendungen an, die einerseits technische Problemgebiete sind und in denen die erfindungsgemäßen Kunststoffbahnen besonders vorteilhafte Lösungen darstellen:

Die Verwendung als elastische Dachabdichtungsbahn, insbesondere für Parkdecks, als Abdichtungsbahn in Deponien, insbesondere in Sondermülldeponien oder als Brückenabdichtung.

Die Massen für die erfindungsgemäßen Bahnen werden hergestellt aus einer Mischung von 1000 Gewichtsteilen Polysulfid-Oligomer oder -Polymer, 300 bis 700 Gewichtsteilen Ruß, gegebenenfalls weiteren Zusatzstoffen und einem Härter auf Basis Mangandioxid.

Die verwendbaren Polysulfid-Oligomere und -Polymere sind solche der allgemeinen Formel $HS\text{-}(RS_x)_n\text{-}RSH$, wobei x im Bereich von 1 bis 3 und n im Bereich von 7 bis 50 liegt und R einen Alkyl-, Alkyläther- oder Alkylthioätherrest darstellt, wobei die Alkylgruppe jeweils bis zu 6 C-Atome haben kann. Der bevorzugte Rest R ist ein Bis-ethyl-formal-Rest der Formel

$$-C_2H_4\text{-}O\text{-}CH_2\text{-}O\text{-}C_2H_4\text{-}.$$

Das Molekulargewicht dieser Verbindungen liegt, abhängig von der Zahl n und der Größe des Restes R, im Bereich von 800 bis 8000.

Diese Polysulfid-Verbindungen haben bei Raumtemperatur eine Viskosität von 0,5 bis 80 Pa·s. Die Polysulfidketten sind bis zu 5 %, bevorzugt im Bereich von 0,1 bis 2 %, trifunktionell vernetzt.

Als Ruß werden bevorzugt verstärkende oder halbverstärkende Flamm- oder Thermalruße eingesetzt. Der ausgewählte Ruß wird mit dem Polysulfid-Oligomer oder -Polymer in an sich bekannter Weise vermischt, möglichst unter Einwirkung hoher Scherkräfte. Dabei entsteht eine pastöse, schwarze Masse.

Die Masse kann weitere Zusatzstoffe, wie geringe Mengen mit dem Härter härtungsbeschleunigend oder -verzögernd wirkende Substanzen, sowie 1 bis 5 Gew.-% eines epoxy- oder merkaptoendständigen Silans enthalten. Diese Masse wird kurz vor der Herstellung der Kunststoffbahn mit einem Härter auf Basis Mangan(IV)-oxid vermischt.

Derartige Härter sind ebenfalls pastöse Massen, die durch Vermischen von Mangan(IV)-oxid mit einem mit dem Polysulfid-Oligomer oder -Polymer verträglichen Weichmacher, etwa einem Chlorparaffin, hydriertem Terphenyl oder einem Phthalatweichmacher, und eventuellen Verzögerungs- oder Beschleunigungsmitteln (Molekularsieb, Stearinsäure o. ä.) hergestellt werden. Das Gewichtsverhältnis von Mangan(IV)-oxid zu Weichermacher liegt im Bereich von 50 bis 70 zu 30 bis 50.

Als Mangan(IV)-oxid werden bevorzugt solche Typen eingesetzt, die als Härter für Polysulfidpolymere im Handel sind. Es handelt sich dabei meist um gamma- oder delta-Mangan(IV)-oxid, das zudem, je nach Hersteller, durch Dosierung mit Fremddionen weiter aktiviert wurde. Dieses Mangan(IV)-oxid kann bis zu 8 Gew.-% Wasser enthalten.

Die verwendete Menge an Mangan(IV)-oxid muß so bemessen sein, daß alle Merkaptogruppen oxidativ zu Disulfidbrücken vernetzt werden können. Zweckmäßigerweise wird die 2- bis 3fache der stöchiometrisch notwendigen Menge eingesetzt.

Nach dem Vermischen der Polysulfidkomponente mit der Härterkomponente beginnt bei Raumtemperatur durch oxidative Verknüpfung der Merkaptogruppen zu Disulfidgruppen der Härtungsprozeß, der durch Wahl von Verzögerern oder Beschleunigern so gesteuert werden kann, daß die Mischung im Zeitrahmen von 5 min bis zu mehreren Stunden noch verarbeitet werden kann.

In dieser Zeit kann mit an sich bekannten Verfahren, etwa durch Extrusion, Walzen oder Rakelcoating, die Mischung zu einer Bahn gefertigt werden, die dann bei erhöhter Temperatur (etwa 80 bis 100 °C) oder durch Einwirkung von Infrarot- oder Mikrowellenstrahlung vollkommen vernetzt wird, so daß eine klebfreie, gummielastische Bahn mit hoher Dehnbarkeit entsteht.

Durch Einstellung der Abstände der formgebenden Werkzeuge läßt sich die Dicke der Bahn, die üblicherweise im Bereich von 0,5 bis 3 mm liegt, einstellen.

Die erfindungsgemäße Kunststoffbahn kann wahlweise ohne oder mit einer verstärkenden Einlage hergestellt werden. Derartige Einlagen können Folien, Fasern, Gewebe, Netze oder Vliese aus einem Material sein, das mit den Polysulfid-Oligomeren oder -Polymeren einen guten Verbund ergibt, wie etwa Glas, Metall, Cellulose, Polyester oder gummi- oder kautschukbeschichtetes oder imprägniertes unverträgliches Gewebe. Desgleichen kann die erfindungsgemäße Kunststoffbahn auf einer Seite mit einer Folie, einem Gewebe oder Vlies kaschiert sein, wobei aber bevorzugt die Randbereiche nicht kaschiert sind, damit eine einwandfreie Verklebung gewährleistet ist.

Diese Verklebung mit einem anderen Baustoff oder mit einer weiteren erfindungsgemäßen Kunststoffbahn erfolgt bevorzugt mit einer Polysulfidmasse, die eine der Kunststoffbahn entsprechende Zusammensetzung hat.

Dabei wird beim Verkleben der erfindungsgemäßen Bahnen miteinander ein chemisch einheitlicher Verbund erzeugt, der eine störungs- und fehlerfreie, homogene Verbindung der Bahnen darstellt. Es ist ein weiterer Vorteil der Kunststoffbahn, daß sie mit Hilfe einer Masse aus identischem Material auf nahezu alle festen Hintergründe geklebt werden kann.

Beispiel

5000 g eines Polysulfid-Polymers der durchschnittlichen Struktur

$$HS-(C_2H_4-O-CH_2-O-C_2H_4-SS)_{23}-C_2H_4-O-CH_2-O-C_2H_4-SH$$

mit etwa 2 % Quervernetzung, einem mittleren Molekulargewicht von 4000 und einer Viskosität bei 27 °C von 35 bis 45 Pa·s (Thiokol[R] LP-2), werden mit 3000 g eines Flammrußes (Printex[R] 25) in einem Doppelwellendissolver vermischt. Die erhaltene Masse wird mit 500 g einer Paste aus 58 Gew.-% Mangan-(IV)-oxid, 38 Gew.-% Benzylbutylphthalat und 4 Gew.-% eines Beschleunigers (Tetraethylthiuramdisulfid) vermengt.

Die entstandene Mischung wird innerhalb von 15 min mittels einer Walze zu einer 2 mm dicken Bahn geformt, die durch kurzfristiges Erhitzen auf 100 °C gehärtet wird. Die Prüfung dieser Bahn ergibt folgende Werte:

| E-Modul 100 % | $2,5 \text{ N/mm}^2$ |
|---|---|
| maximale Dehnbarkeit | 400 % |
| Zerreißfestigkeit | $5,5 \text{ N/mm}^2$ |
| UV-Beständigkeit | 350 d Xenotest, keine Veränderung der Oberfläche |
| Temperaturbeständigkeit | 2 bis 4 h bei 180 °C |

Auf einer Unterkonstruktion einer Brückenfahrbahn werden mehrere 1 m breite Bahnen nebeneinander ausgelegt. Dabei wird jeweils auf die zuerst gelegte Bahn im Randbereich auf der gesamten Länge eine etwa 2 cm dicke Raupe aus einer kurz zuvor mit einem Härter vermischten Polysulfidmasse gespritzt und die jeweils nächste Bahn so auf die untere Bahn gelegt, daß sich die Randbereiche etwa 5 cm überlappen und die Raupe aus Polysulfid-Härter-Masse zwischen beiden Bahnen als Klebeschicht verteilt wird.

```
Zusammensetzung der Masse:
Polysulfid-Polymer (entsprechend der Bahn)   1000 g
Flammruß                                       400 g


Zusammensetzung des Härters:
Mangan(IV)-oxid                                 60 g
Benzylbutylphthalat                             38 g
Stearinsäure                                     2 g


Mischungsverhältnis Masse : Härter =   1400 : 100
```

Nach 6 h ist die verklebende Masse soweit gehärtet, daß eine chemisch einheitliche Bahn über der gesamten Unterkonstruktion der Brückenfahrbahn vorliegt. Auf diese Bahn wird eine Deckschicht gefertigt, indem eine 240 °C heiße Asphaltmischung aufgebracht und verteilt wird. Durch diese Fertigung wird die erfindungsgemäße Bahn weder thermisch noch mechanisch nennenswert beschädigt, so daß sie ihre Abdichtungsfunktion voll wahrnehmen kann.

**Patentansprüche**

1. Kunststoffbahn, hergestellt aus einer Mischung von 1000 Gewichtsteilen Polysulfid-Oligomer oder -Polymer, 300 bis 700 Gewichtsteilen Ruß und einem Härter auf Basis Mangan(IV)-oxid.

2. Kunststoffbahn nach Anspruch 1, **dadurch gekennzeichnet**, daß sie zusätzlich 10 bis 50 Gewichtsteile eines reaktiven Silans enthält.

3. Kunststoffbahn nach den Ansprüchen 1 und 2, **dadurch gekennzeichnet**, daß der Härter eine Paste aus 50 bis 70 Gew.-% Mangan(IV)-oxid und 30 bis 50 Gew.-% eines Weichmachers ist.

4. Kunststoffbahn nach den Ansprüchen 1 bis 3, hergestellt aus 1000 Gewichtsteilen eines Polysulfid-Polymers der durchschnittlichen Struktur

$$HS\text{-}(C_2H_4\text{-}O\text{-}CH_2\text{-}O\text{-}C_2H_4\text{-}SS)_{23}\text{-}C_2H_4\text{-}O\text{-}CH_2\text{-}O\text{-}C_2H_4\text{-}SH$$

mit etwa 2,0 % Quervernetzung und einem mittleren Molekulargewicht von 4000, 300 bis 700 Gewichtsteilen Ruß und 80 bis 140 Gewichtsteilen einer Härterpaste aus 60 Gew.-% Mangan(IV)-oxid und 40 Gew.-% Phthalatweichmacher.

5. Kunststoffbahn nach den Ansprüchen 1 bis 4, **dadurch gekennzeichnet,** daß sie eine verstärkende Einlage enthält.

6. Kunststoffbahn nach den Ansprüchen 1 bis 5, **dadurch gekennzeichnet,** daß sie auf einer Seite mit einer Folie, einem Gewebe oder Vlies kaschiert ist.

7. Verfahren zur Verklebung der Kunststoffbahnen gemäß der Ansprüche 1 bis 6, **dadurch gekennzeichnet**, daß die sich jeweils überlappenden Randbereiche der einzelnen Bahnen mittels einer Polysulfidmasse miteinander verklebt werden, deren Zusammensetzung der der Kunststoffbahnen analog ist.

8. Verwendung der Kunststoffbahn nach den Ansprüchen 1 bis 6 als Dachbahn.

9. Verwendung der Kunststoffbahn nach den Ansprüchen 1 bis 6 als Abdichtungsbahn in Deponien.

10. Verwendung der Kunststoffbahn nach den Ansprüchen 1 bis 6 als Brückenabdichtung.

## Claims

1. A plastics sheet, produced from a mixture of 1000 parts by weight of polysulphide oligomer or polymer, from 300 to 700 parts by weight of soot and a hardener based on manganese (IV) oxide.

2. A plastics sheet according to Claim 1, characterized in that it additionally contains from 10 to 50 parts by weight of a reactive silane.

3. A plastics sheet according to Claims 1 and 2, characterized in that the hardener is a paste consisting of from 50 to 70% by weight of manganese (IV) oxide and from 30 to 50% by weight of a softener.

4. A plastics sheet according to Claims 1 to 3, produced from 1000 parts by weight of a polysulphide polymer of the average structure

$$HS\text{-}(C_2H_4\text{-}O\text{-}CH_2\text{-}O\text{-}C_2H_4\text{-}SS)_{23}\text{-}C_2H_4\text{-}O\text{-}CH_2\text{-}O\text{-}C_2H_4\text{-}SH$$

with approximately 2.0% cross-linking and an average molecular weight of 4000, from 300 to 700 parts by weight of soot and from 80 to 140 parts by weight of a hardener paste consisting of 60% by weight of manganese (IV) oxide and 40% by weight of phthalate softener.

5. A plastics sheet according to Claims 1 to 4, characterized in that it contains a reinforcing inlay.

6. A plastics sheet according to Claims 1 to 5, characterized in that it is lined on one side with a foil, a fabric or a fleece.

7. A method of gluing the plastics sheets according to Claims 1 to 6, characterized in that the mutually overlapping edge areas of the individual sheets are glued together by means of a polysulphide compound, the composition of which is similar to that of the plastics sheets.

8. Use of the plastics sheet according to Claims 1 to 6 as a roofing sheet.

9. Use of the plastics sheet according to Claims 1 to 6 as a sealing sheet in deposits.

10. Use of the plastics sheet according to Claims 1 to 6 as a bridge seal.

**Revendications**

1. Bande en matière synthétique réalisée à partir d'un mélange de 1000 parties en poids d'oligomère ou de polymère de polysulfure, de 300 à 700 parties en poids de noir de carbone et d'un durcisseur à base d'oxyde de manganèse(IV).

2. Bande en matière synthétique selon la revendication 1, caractérisée en ce qu'elle contient en outre 10 à 50 parties en poids d'un silane réactif.

3. Bande en matière synthétique selon les revendications 1 et 2, caractérisée en ce que le durcisseur est une pâte obtenue à partir de 50 à 70% en poids d'oxyde de manganèse(IV) et de 30 à 50% en poids d'un plastifiant.

4. Bande en matière synthétique selon les revendications 1 à 3, réalisée à partir de 1000 parties en poids d'un polymère de polysulfure de structure moyenne $HS\text{-}(C_2H_4\text{-}O\text{-}CH_2\text{-}O\text{-}C_2H_4\text{-}SS)_{23}\text{-}C_2H_4\text{-}O\text{-}CH_2\text{-}O\text{-}C_2H_4\text{-}SH$ avec environ 2,0% de réticulation transversale et une masse moléculaire moyenne de 4000, de 300 à 700 parties en poids de noir de carbone et de 80 à 140 parties en poids d'une pâte de durcisseur à partir de 60% en poids d'oxyde de manganèse(IV) et de 40% en poids de plastifiant à base de phtalate.

5. Bande en matière synthétique selon les revendications 1 à 4, caractérisée en ce qu'elle contient un renfort.

6. Bande en matière synthétique selon les revendications 1 à 5, caractérisée en ce qu'elle est doublée sur une face d'une feuille, d'un tissu ou d'une nappe de non tissé.

7. Procédé de collage des bandes en matière synthétique selon les revendications 1 à 6, caractérisé en ce que les zones en bordure des bandes individuelles qui se recouvrent sont collées ensemble a l'aide d'une masse de polysulfure dont la composition est identique à celle des bandes en matière synthétique.

8. Utilisation de la bande en matière synthétique selon les revendications 1 à 6 comme panneau pour toitures.

9. Utilisation de la bande en matière synthétique selon les revendications 1 à 6 comme panneau d'étanchéité dans les dépôts de déchets.

10. Utilisation de la bande en matière synthétique selon les revendications 1 à 6 comme matériau d'étanchéité pour ponts.